# EUROPEAN PATENT APPLICATION

(11) **EP 4 672 674 A1**
(43) Date of publication of application: **31.12.2025**
(21) Application number: 25181567.6
(22) Date of filing: 09.06.2025
(51) Int. Cl.: H04L 9/40, H04W 12/06

(54) **INFORMATION PROCESSING APPARATUS, COMMUNICATION METHOD, STORAGE MEDIUM, AND MOBILE BODY**

(30) Priority: 25.06.2024 JP 2024102030
(71) Applicant: Toyota Jidosha Kabushiki Kaisha, Toyota-shi, Aichi-ken 471-8571 (JP)
(72) Inventor: TAKEOKA, Koji, Aichi-ken, 471-8571 (JP)
(74) Representative: D Young & Co LLP

(57) **Abstract**

An information processing apparatus (10) communicable with a communication apparatus, the information processing apparatus comprises: a Universal Integrated Circuit Card (UICC) (105) storing authentication data that is used for authentication of the information processing apparatus (10); at least one of a wireless communication unit (103) used for wireless connection to a non-cellular network, a connector to which a wireless device used for wireless connection to the non-cellular network is detachably attachable, and a communication unit used for wired connection to the non-cellular network; and a processor configured to transmit the authentication data to the communication apparatus via the non-cellular network after the information processing apparatus (10) is connected to the communication apparatus via the non-cellular network by use of the wireless communication unit (103), the wireless device, or the communication unit.

## Description

### CROSS REFERENCE TO THE RELATED APPLICATION

This application claims the benefit of Japanese Patent Application No. 2024-102030, filed on June 25, 2024, which is hereby incorporated by reference herein in its entirety.

### BACKGROUND

### Technical Field

The present disclosure relates to an information processing apparatus, a communication method, and a storage medium storing a program.

### Description of the Related Art

Conventionally, there are communication apparatuses that include a SIM card that is capable of storing a plurality of communication profiles (for example, Japanese Patent Laid-Open No. 2022-180105).

### SUMMARY

An object of the present disclosure is to provide an information processing apparatus, a communication method, and a program by which robust authentication may be performed at a time of communication that uses a non-cellular network.

One aspect of an embodiment of the present disclosure is an information processing apparatus communicable with a communication apparatus, the information processing apparatus comprising:
a Universal Integrated Circuit Card (UICC) storing authentication data that is used for authentication of the information processing apparatus;
at least one of a wireless communication unit used for wireless connection to a non-cellular network, a connector to which a wireless device used for wireless connection to the non-cellular network is detachably attachable, and a communication unit used for wired connection to the non-cellular network; and
a processor configured to transmit the authentication data to the communication apparatus via the non-cellular network after the information processing apparatus is connected to the communication apparatus via the non-cellular network by use of the wireless communication unit, the wireless device, or the communication unit.

Another aspect of an embodiment of the present disclosure is a communication method performed by an information processing apparatus communicable with a communication apparatus and including a Universal Integrated Circuit Card (UICC) storing authentication data that is used for authentication, the method comprising:
transmitting the authentication data to the communication apparatus via a non-cellular network after the information processing apparatus is connected to the communication apparatus via the non-cellular network by use of one of a wireless communication unit used for wireless connection to the non-cellular network, a wireless device attached to a connector of the information processing apparatus and used for wireless connection to the non-cellular network, and a communication unit used for wired connection to the non-cellular network.

Furthermore, as another mode, a program that causes a computer to perform the method described above, a non-transitory computer-readable storage medium storing the program, a mobile body including the information processing apparatus, or the like can be cited.

According to the present disclosure, robust authentication can be performed at a time of communication that uses a non-cellular network.

### BRIEF DESCRIPTION OF THE DRAWINGS

Fig. 1 is a diagram illustrating an example of a communication system according to an embodiment;
Fig. 2 is a diagram illustrating an example configuration of an onboard apparatus 10;
Fig. 3 illustrates an example configuration of a communication apparatus 20; and
Fig. 4 is a sequence diagram illustrating an example operation of the communication system.

### DESCRIPTION OF THE EMBODIMENTS

A business operator (for example, a manufacturing company (manufacturer), a sales company, a rental company or the like of vehicles) dealing in vehicles including a communication function, such as connected cars and autonomous vehicles, may want to collect data about a vehicle (for example, data about driving of the vehicle, and data about communication by the vehicle). Accordingly, it is conceivable for a communication apparatus (communication facility) of the business operator to receive, via a network, predetermined data (IoT data) transmitted from a device mounted in a vehicle. Furthermore, the business operator may, as a service provider, provide services based on an analysis result of the IoT data or the like to a user or the like of the vehicle.

However, with a vehicle having no communication function, a user is not able to receive such a service. Moreover, even with a vehicle having a communication function, the communication function may be disabled due to various reasons such as a generational change in a communication standard. The service cannot be received also in such a case. A communication system described below is for solving such a problem.

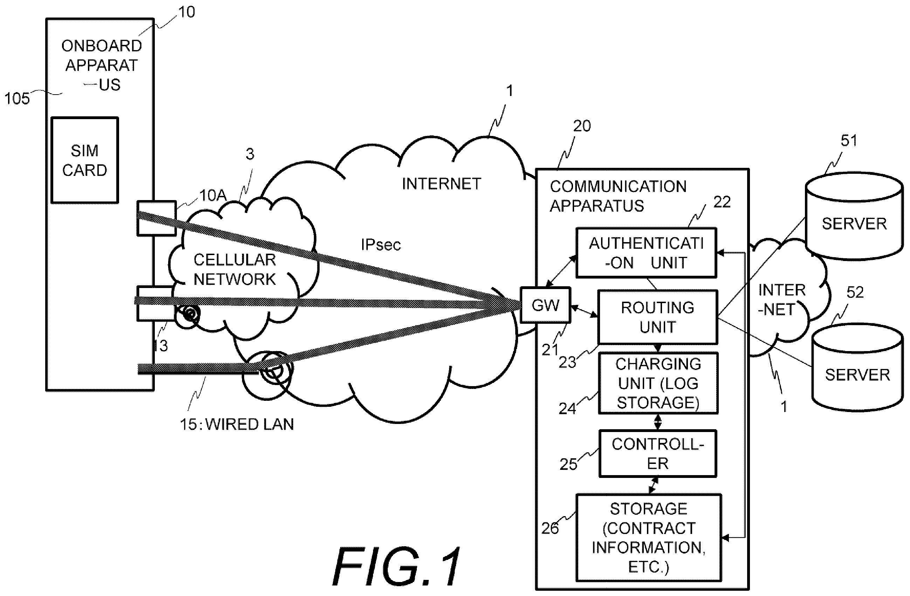

In the following, an embodiment of the present disclosure will be described with reference to the drawings. The configuration of the embodiment described below is an example, and the present disclosure is not limited to the configuration of the embodiment. Fig. 1 is a diagram illustrating an example of a communication system according to the embodiment. The communication system includes an onboard apparatus 10 mounted on a vehicle, and a communication apparatus 20. The onboard apparatus 10 may be stationary in the vehicle, or may be portable.

Thanks to communication between the onboard apparatus 10 and the communication apparatus 20, a user of the vehicle can provide a predetermined service or receive a service. By communicating with a server apparatus (such as a server 51 or a server 52) connected to the communication apparatus 20, the onboard apparatus 10 can provide or receive various services. For example, the various services include a navigation service, a remote control service (such as remote air conditioning), an in-vehicle Wi-Fi service, and an emergency call service.

By executing a predetermined application program (application), the onboard apparatus 10 can collect information about the vehicle (data about driving of the vehicle, such as position and vehicle speed) from the onboard apparatus 10 or an onboard apparatus other than the onboard apparatus 10 (such as a car navigation apparatus, a dashboard camera, or an electronic control unit (ECU)).

The onboard apparatus 10 connects to the communication apparatus 20, and communication with a server apparatus via the communication apparatus 20 is enabled. Data generated by the vehicle or the onboard apparatus 10 is transmitted to the communication apparatus 20, and the communication apparatus 20 transmits transmission target data to a predetermined destination (a communication counterpart; for example, the server 51 or 52). Additionally, the destination of the data may be the communication apparatus 20.

The onboard apparatus 10 can use an Internet Protocol (IP) network to perform communication with the communication apparatus 20. For example, a public network such as Internet 1 can be used as the IP network. The IP network may be other than the Internet 1. As an access network to the Internet 1, a cellular network 3, a wireless Local Area Network (LAN), a satellite communication network, or a wired LAN 15 may be used, for example.

The communication apparatus 20 is configured from one information processing apparatus (computer) or a collection of two or more information processing apparatuses that are connected via a network. The communication apparatus 20 has an internal network configuration formed by a collection of structural elements (network nodes; referred to as network functions (NF) in 5G) of a core network of a cellular network according to intended use or function of the communication apparatus 20. In the example illustrated in Fig. 1, the communication apparatus 20 operates as an apparatus including a gateway (GW) 21, an authentication unit 22, a routing unit 23, a charging unit (log storage) 24, a controller 25, and a storage 26.

The GW 21 is connected to the onboard apparatus 10 via an access network and the Internet 1 (IP network). In the case where the internal network configuration of the communication apparatus 20 is a 5G core network (5GC), a non-3GPP Interworking Function (N3IWF) is disposed as the GW 21. The N3IWF is a gateway for accommodating untrusted non-3GPP wireless access. In the case where the internal network configuration of the communication apparatus 20 is LTE or a 4G core network (EPC), an enhanced Packet Data Gateway (ePDG) is used as the GW 21. A tunnel based on IPsec (referred to as an IPsec tunnel or an SWu tunnel) is established as an encrypted line between the onboard apparatus 10 and the GW 21, and data transmitted from the onboard apparatus 10 is transmitted to the GW 21 through the SWu tunnel.

In the case where the onboard apparatus 10 is to access the communication apparatus 20, the onboard apparatus 10 acquires SIM profile information (SIM information) stored in a SIM card 105 of the onboard apparatus 10, and transmits the same to the communication apparatus 20 as authentication data (control information). The authentication unit 22 can perform authentication of the onboard apparatus 10 possessing the SIM card 105 by using the SIM profile information in the SIM card 105 and subscriber information stored in the storage 26. As an authentication method (authentication mechanism), Authentication and Key Agreement (AKA) may be adopted.

In the case where the internal network configuration of the communication apparatus 20 is the 5GC, an Authentication Server Function (AUSF) may be used as the authentication unit 22, and Unified Data Management (UDM) may be used as the storage 26. In the case where the internal network configuration of the communication apparatus 20 is the EPC, Authentication, Authorization, Accounting (AAA) may be used as the authentication unit 22, and a Home Subscriber Server (HSS) may be used as the storage 26. The authentication unit 22 may further operate as an AMF in the 5GC, or an MME in the EPC.

In the case where a packet storing user data is received, the routing unit 23 determines whether a destination IP address of the packet is registered in a routing table, and if not registered, the routing unit 23 performs a process of calculating a shortest path to the destination IP address, determining information indicating a route (output port) according to the shortest path, and registering the destination IP address and output port information in the routing table. Furthermore, the routing unit 23 performs a process of transferring a packet, whose destination IP address is registered in the routing table, to a corresponding output port (destination).

In the case where the internal network configuration of the communication apparatus 20 is the 5GC, a User Plane Function (UPF) may be used as the routing unit 23, and in the case where the internal network configuration of the communication apparatus 20 is the EPC, a Packet data network GateWay (P-GW) may be used as the routing unit 23. A GTPu tunnel is formed between the GW 21 and the routing unit 23 (UPF or P-GW), and the GW 21 transmits a packet obtained by termination of the SWu tunnel to the routing unit 23 through the GTPu tunnel.

Furthermore, the routing unit 23 generates and outputs a charge data record (CDR) that is used as charge information, and transfers the same to the charging unit 24. The CDR is communication log information (log information) capable of including identification information of a packet flow (such as source/destination TCP port numbers, source/destination IP addresses), a start time and an end time of the packet flow, data amount, and the like.

For example, in the case where the internal network configuration of the communication apparatus 20 is the 5GC, a Charging Function (CHF) is used as the charging unit 24, and in the case where the internal network configuration is the EPC, a Policy and Charging Rules Function (PCRF) is used as the charging unit 24. The charging unit 24 calculates a usage fee of packet communication by using the CDR. For example, the usage fee is calculated based on the data amount of packet and a fee plan.

The controller 25 generates information indicating an incentive that is given to a user of the vehicle by the business operator, by using the CDR (log information).

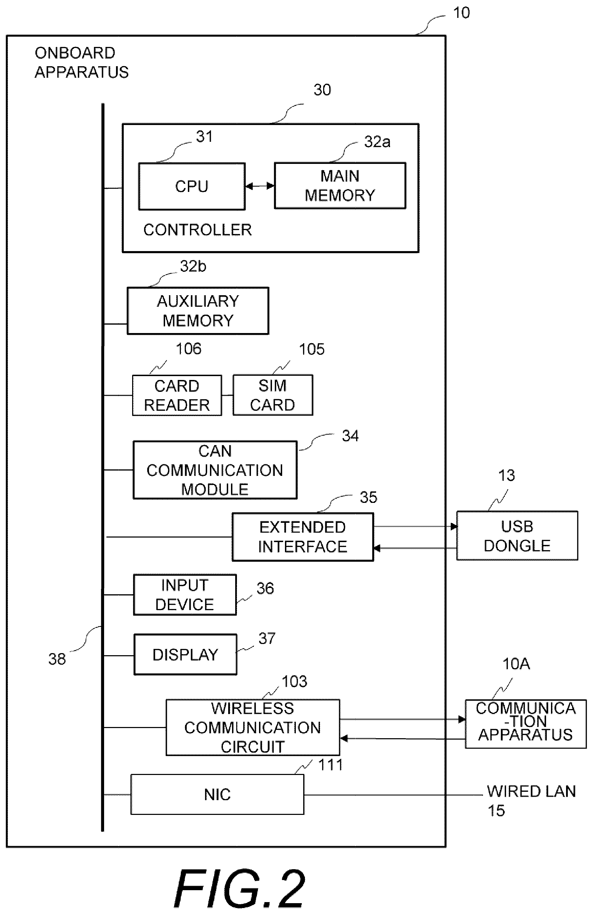

Fig. 2 is a diagram illustrating an example configuration of the onboard apparatus 10. The onboard apparatus 10 includes a controller 30 including a CPU 31 and a main memory 32a, an auxiliary memory 32b, a CAN communication module 34, and an extended interface 35 that are interconnected by a bus 38. The onboard apparatus 10 also includes the SIM card 105 and a card reader 106, an input device 36 and a display 37, a wireless communication circuit 103, and a network interface card (NIC) 111.

The auxiliary memory 32b is a hard disk drive (HDD), a solid state drive (SSD), or an EEPROM, for example. The auxiliary memory 32b stores an operating system (OS), and a plurality of types of application programs (applications), for example. The applications include programs for implementing various functions, such as a communication control program. The main memory 32a is a random access memory (RAM), a read only memory (ROM), or a combination of a RAM and a ROM, for example. The CPU 31 operates as the onboard apparatus 10 by executing various programs stored in the main memory 32a or the auxiliary memory 32b.

The CAN communication module 34 is a communication interface for connecting the onboard apparatus 10 to an in-vehicle network (Controller Area Network (CAN)) of the vehicle. For example, the CAN communication module 34 may include a network interface board that performs communication according to a CAN protocol. The onboard apparatus 10 is capable of performing data communication with other structural elements (such as an ECU) of the vehicle via the CAN communication module 34.

The extended interface 35 is an interface for interconnecting the onboard apparatus 10 and a communication apparatus 10A or a USB dongle 13. For example, the extended interface 35 is a universal serial bus (USB) interface, and includes a female connector (an example of a connector) to which a USB cable to be connected to the communication apparatus 10A or a male connector of the USB dongle 13 can be detachably attached. The communication apparatus 10A is a smartphone or a smart device such as a cellular tablet terminal. The communication apparatus 10A can be detachably attached to the extended interface 35 by a USB cable connected to the connector. The USB dongle 13 is a cellular USB dongle compatible with a cellular network 3, but the onboard apparatus 10 may be connected to the Internet 1 using a USB dongle for Wi-Fi or a USB dongle for satellite communication.

The wireless communication circuit 103 is capable of performing wireless communication with an external apparatus (such as the communication apparatus 10A) compatible with a wireless communication method such as Bluetooth (registered trademark) or a wireless LAN (including IEEE 802.11 series and Wi-Fi). The NIC 111 is used for connection to the wired LAN 15. The wired LAN 15 is connected to the Internet 1 via a connection appliance for the Internet 1, such as a broadband modem. In this manner, the onboard apparatus 10 does not have a configuration for connecting to a cellular network such as the cellular network 3, and does not have a function of registering a location with the cellular network. However, the onboard apparatus 10 has a configuration that enables connection to the Internet 1 (the communication apparatus 20) via the cellular network 3 by connecting to the cellular network 3 using the communication apparatus 10A or the cellular USB dongle 13. Furthermore, the onboard apparatus 10 is also capable of communicating with the communication apparatus 20 by connecting to the Internet 1 via the wired LAN 15 or a satellite communication network (Non-Terrestrial Network (NTN)). A connection mechanism for the wired LAN 15 may be optional.

The input device 36 is a key, a button, or the like, and is used to input information. The display 37 is used to display (notify of) information. The input device 36 may be a user interface that is displayed on the display 37. The input device 36 and the display 37 are optional and may be omitted.

The SIM card 105 is a universal integrated circuit card (UICC), and operates as a microcomputer including a CPU and a memory. The SIM card 105 stores profile information that is used for authentication. The profile information includes an identification number and key information. For example, the identification number is an International Mobile Subscription Identity (IMSI), a Mobile Subscriber Integrated Services Digital Network Number (MSISDN), or an Integrated Circuit Card IDentity (ICCID). The key information is a K value (Ki) that is a shared secret key used in AKA authentication, and an operation code (OPc).

The SIM card 105 is a SIM card that is issued by a business operator (such as a vehicle manufacturer) that provides services using the communication apparatus 20. The SIM card 105 according to the present embodiment is not aimed at registering a location of the onboard apparatus 10 with a predetermined cellular network and establishing a communication path (PDU session) in the cellular network, and its main objective is authentication of the onboard apparatus 10. Accordingly, the SIM card 105 may have a same configuration as a regular SIM card, but functions related to processes (such as location registration, and establishment of a communication path in a cellular network) not related to the objective such as authentication may be omitted.

The SIM card 105 includes profile information (identifier and key information) for performing authentication at the communication apparatus 20. The identifier is a subscriber identifier such as an International Mobile Subscriber Identity (IMSI) or a Subscription Permanent Identifier (SUPI), for example. The identifier may be a card identifier such as an Integrated Circuit Card ID (ICCID). The ICCID is a serial number of the SIM card including a maximum of 19 digits.

The IMSI is a maximum 15-digit number, and includes, according to a communication standard such as 3GPP (registered trademark) TS23.003, a 3-digit Mobile Country Code (MCC), a 2- to 3-digit Mobile Network Code (MNC), and a 9-to 10-digit Mobile Subscription Identification Number (MSIN), and the MCC and the MNC form a Public Land Mobile Network -ID (PLMN-ID). However, because the objective of the SIM card 105 is not location registration, a uniquely identifiable series of numbers generated according to a rule different from a communication standard may also be used instead of the IMSI or the ICCID. The series of numbers is formed to match the number of digits of the IMSI or the ICCID. In this manner, the profile information (authentication data) may include the IMSI, the ICCID, or a uniquely identifiable identifier that is used instead of the IMSI or the ICCID.

Fig. 2 illustrates an example of an apparatus configuration including the wireless communication circuit 103, the extended interface 35 to which the USB dongle 13 can be detachably attached, and the NIC 111 that performs wired connection to the Internet 1, but one of the above is enough to perform communication with the communication apparatus 20.

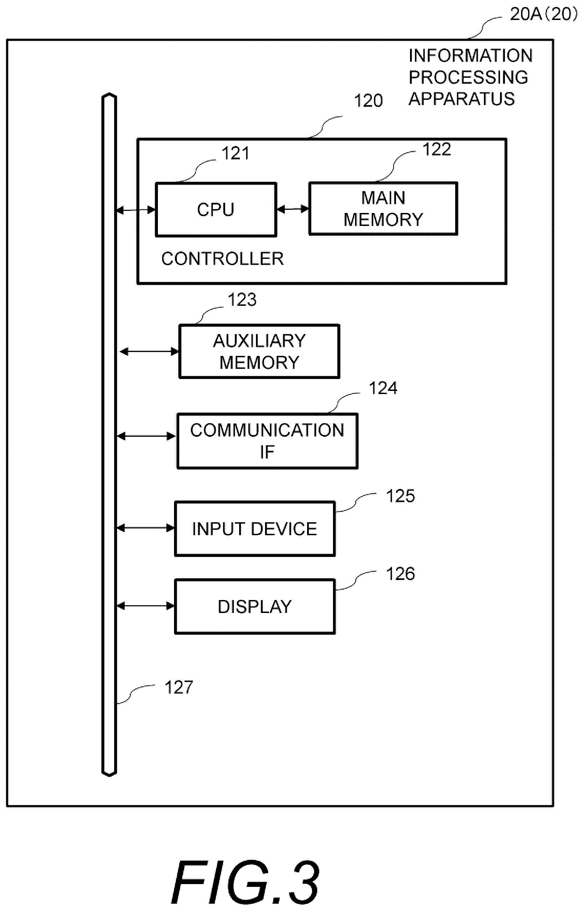

Fig. 3 illustrates an example configuration of an information processing apparatus 20A that can be used as the communication apparatus 20. The communication apparatus 20 may be configured from one or more information processing apparatuses 20A. In Fig. 3, the information processing apparatus 20A includes a controller 120, an auxiliary memory 123, a communication interface (communication IF) 124, an input device 125, and a display 126 that are interconnected by a bus 127.

The controller 120 includes a CPU 121, and a main memory 122 that is connected to the CPU 121. When the CPU 121 executes various programs stored in the main memory 122 or the auxiliary memory 123, the communication apparatus 20 is caused to operate as an apparatus including the GW 21, the authentication unit 22, the routing unit 23, the charging unit (log storage) 24, the controller 25, and the storage 26.

The communication interface (communication IF) 124 includes a communication interface circuit for the Internet 1 (IP network), and performs transmission/reception of control information and user data (packet), format (protocol) conversion, and the like. The input device 125 is a button, a key, a touch panel or the like used to input information and perform setting, for example. The display 126 is used to display information. The input device 125 and the display 126 are optional.

Additionally, the CPU (processor) forming each of the controllers 30 and 120 described above may be a processor other than the CPU, such as a DSP or a GPU, or may be a combination of the processor and the CPU. Furthermore, processes or operation performed by each of the controllers 30 and 120 may be performed by a semiconductor device (hardware) such as a field programmable gate array (FPGA) or an application specific integrated circuit (ASIC), or a combination of a processor such as a system on a chip (SoC) and hardware. The controller, the FPGA, the ASIC, and the SoC are each an example of "circuitry".

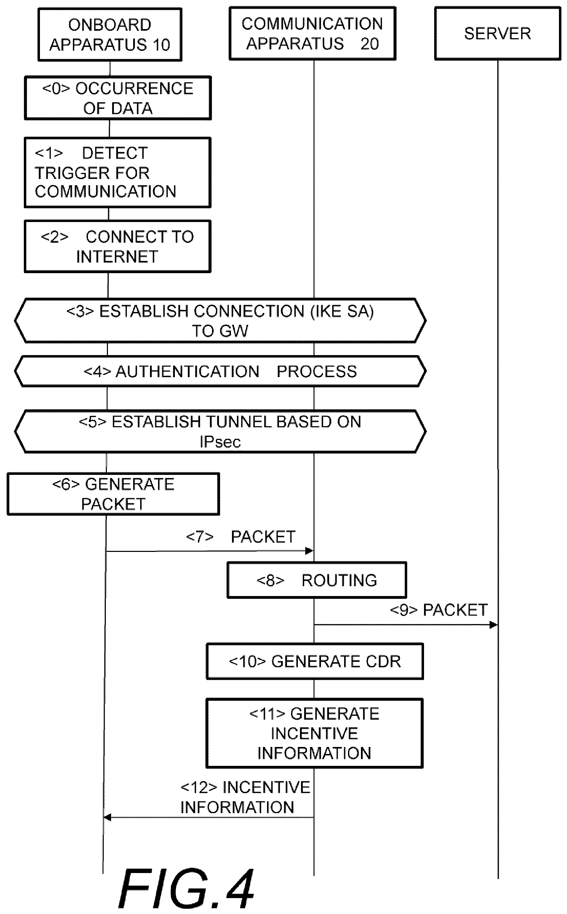

Fig. 4 is a sequence diagram illustrating an example operation of the communication system. In <0> in Fig. 4, the onboard apparatus 10 acquires transmission target data. However, the timing of acquisition of the data is merely an example, and transmission/reception of data can be performed at any appropriate timing.

In <1> in Fig. 4, the controller 30 of the onboard apparatus 10 detects a trigger for communication start. The trigger may be reception of a communication request message from the onboard apparatus 10, detection of an instruction to start communication input from the input device 36, or detection by the controller 30 of occurrence of any other event (such as accumulation of transmission target data in the auxiliary memory 32b). The trigger can be set as appropriate. The transmission target data may be data received from an in-vehicle network, or may be data generated by the onboard apparatus 10.

In <2> in Fig. 4, the controller 30 performs connection to the Internet 1. For example, the controller 30 causes the display 37 to display information for prompting connection to the communication apparatus 10A, connection of the USB dongle 13 to the extended interface 35, or connection between the NIC 111 and the wired LAN 15, and prompts an operator of the onboard apparatus 10 to connect to the Internet 1. The controller 30 performs a process of connecting to the Internet 1 by using the communication apparatus 10A, the USB dongle 13, the wired LAN 15 or the like that is wirelessly or physically connected to the onboard apparatus 10.

In <3> in Fig. 4, the controller 30 establishes an encrypted communication channel (IKE SA) referred to as a security association (SA) to the GW 21 of the communication apparatus 20. An IP address of the GW 21 is known beforehand by the onboard apparatus 10. Alternatively, the onboard apparatus 10 may find out the IP address of the GW 21 by using a DNS system.

In <4> in Fig. 4, an authentication process using the profile information (authentication data) stored in the SIM card 105 is performed between the onboard apparatus 10 and the communication apparatus 20. The authentication process may be performed by the following sequence, for example.
(1) The onboard apparatus 10 acquires the IMSI from the SIM card 105, and transmits a connection request including the IMSI to the GW 21. The GW 21 transmits the connection request to the authentication unit 22.
(2) The authentication unit 22 transmits an authentication information request to the storage 26.
(3) At the storage 26, a RAND, an AUTN, and an XRES are created by using Ki and OPc according to the IMSI, a sequence number (SQN), and the like that are stored in advance. The SQN is incremented by every authentication, and is synchronously updated at the onboard apparatus 10 and the communication apparatus 20. The RAND is a random number, and the AUTN is a message authentication code for detecting tampering with the RAND, and includes the SQN, a cipher key (CK), a message authentication key (Integrity Key: IK), and the like. The XRES is an expected value of a response from the SIM card 105.
(4) The authentication unit 22 holds the XRES, and transmits the AUTN and the RAND. The CK and the IK are held as shared keys for IPsec set with the onboard apparatus 10. The AUTN and the RAND are received by the onboard apparatus 10 via the GW 21, and the onboard apparatus 10 transmits the AUTN and the RAND to the SIM card 105.
(5) The SIM card 105 checks the SQN by checking the SQN included in the AUTN and the SQN in the SIM card 105 against each other. In the case where the SQNs match, the network (communication apparatus 20) is determined to be valid.
(6) In the case where the network is determined to be valid, the SIM card 105 calculates the CK, the IK, and a RES (authentication response) by combining the RAND and the Ki and the OPc held in the SIM card 105.
(7) Values of the CK, the IK, and the RES are transferred from the SIM card 105 to the onboard apparatus 10, and the onboard apparatus 10 transmits the RES to the authentication unit 22. The values of the CK and the IK are held in the onboard apparatus 10 as shared keys for IPsec.
(8) The authentication unit 22 compares the RES and the XRES, and successful authentication is determined in the case where the two coincide. Information indicating successful authentication is transmitted to the onboard apparatus 10.

In <5> in Fig. 4, a tunnel is established based on IPsec. That is, the SWu tunnel is established between the onboard apparatus 10 and the GW 21 and the GTPu tunnel is established between the GW 21 and the routing unit 23 by using the shared keys CK and IK and the like. Note that the operation by the authentication unit 22 in the processes of (1) to (8) described above includes operation by the AMF in a 5G system or an MME in LTE (4G).

In <6> in Fig. 4, the onboard apparatus 10 generates a packet storing the transmission target data, and transmits the same to the GW 21 of the communication apparatus 20 through the SWu tunnel (Fig. 4, <7>). The SWu tunnel is terminated at the GW 21, and an SWu header is removed, and the original packet is obtained. To transmit the packet through the GTPu tunnel established between the GW 21 and the routing unit 23, the GW 21 adds a new header (referred to as a GTPu header) to the packet.

The routing unit 23 performs a termination process of the GTPu tunnel (removal of the GTPu header, etc.) in relation to the packet received from the GW 21, and obtains the original packet. The routing unit 23 performs routing in relation to the original packet (Fig. 4, <8>). That is, in the case where a destination IP address of the original packet (that is, an IP address of the server 51 or 52) is registered in the routing table, the routing unit 23 transfers the packet to an output port associated with the IP address (Fig. 4, <9>). In the case where the IP address is not registered in the routing table, shortest path search is performed using shortest path first (SPF) or the like, and information about an output port corresponding to a shortest path is registered in the routing table in association with the IP address, and the packet is transferred to the output port.

The routing unit 23 generates a charging data record (CDR) including source and destination IP addresses of the original packet, information about a packet flow including source and destination TCP port numbers, a start time and an end time of the packet flow, a data amount of the packet, and the like (Fig. 4, <10>). The CDR is transferred to the charging unit 24. The charging unit 24 calculates the usage fee using the CDR.

In the case where the user is to bear the fee related to packet transmission from the onboard apparatus 10 to the communication apparatus 20, the controller 25 generates incentive information (Fig. 4, <11>). Whether the fee is borne by the user or not can be determined by determining whether a value of a flag (for example, "1" = borne by user, "0" = borne by other than user (for example, business operator)) stored in the main memory 122 or the auxiliary memory 123 of the communication apparatus 20 is "1" or not, for example. Management of packet transmission can be performed for each TCP session (connection) established between the onboard apparatus 10 and the communication apparatus 20, for example. That is, a packet flow from TCP handshake to end of communication may be treated as one unit in relation to which the flag is to be set. For example, the communication apparatus 20 may be configured to store a packet flow that is identified based on specific source and destination TCP ports and source and destination IP addresses, and when a specific packet flow to the onboard apparatus 10 is established, set a flag "1" for the packet flow. Alternatively, a control signal for setting the flag "1" in the case where establishment of a specific packet flow to the communication apparatus 20 is detected by the onboard apparatus 10 may be transmitted to the communication apparatus 20, and the communication apparatus 20 may set the flag "1" according to the control signal. Furthermore, in the case where the bearer of a communication fee is to change during transmission of a large amount of data, the TCP session is temporarily ended, and another TCP session (packet flow) is established. At this time, the communication apparatus 20 can set the flag "1" or "0" in relation to the new TCP session (packet flow) based on determination as to whether it is the specific packet flow mentioned above or reception of the control signal.

In the case where the value of the flag is "1", or in other words, in the case where the user of the vehicle is to bear the fee related to transmission of a packet to the communication apparatus 20, the controller 25 acquires the CDR from the charging unit 24, and generates incentive information for the user (information indicating an action to the user) according to the data amount indicated in the CDR. In the case where the value of the flag is "0", or in other words, in the case where a party (a business operator or the like) other than the user of the vehicle is to bear the fee related to transmission of a packet to the communication apparatus 20, the controller 25 does not perform an operation of generating the incentive information from the charging unit 24.

Specifics of the incentive information may be changed according to the data amount or may be fixed regardless of the data amount. Specifics of the incentive may be, but are not limited to, some kind of a bonus such as points that can be used at the time of purchasing a product or receiving a service, a coupon, a voucher, or cashback. Moreover, information indicating an action other than provision of an incentive may be generated instead of the incentive information.

The incentive information that is generated is stored in the storage 26, for example, and is used as information that provides a basis for the business operator to provide a certain incentive to the user. For example, the incentive information may be transmitted to the onboard apparatus 10 (Fig. 4, <12>), stored in the auxiliary memory 32b, and displayed on the display 37 as necessary. Any method may be used to provide the incentive.

In the embodiment, the onboard apparatus 10 (information processing apparatus) includes the controller 30. The controller 30 includes the SIM card 105 (an UICC as a storage) for storing the authentication data. Furthermore, the onboard apparatus 10 (controller 30) includes at least one of the wireless communication circuit 103 (wireless communication unit) that performs wireless connection to the Internet 1 (non-cellular network), the extended interface 35 (connector) to which the USB dongle 13 (wireless device) used for wireless connection to the Internet 1 can be detachably attached, and the NIC 111 (communication unit) that performs wired connection to the Internet 1. After being connected to the Internet 1 via the communication apparatus 10A, the USB dongle 13, or the wired LAN 15, the onboard apparatus 10 (controller 30) acquires the authentication data from the SIM card 105, and transmits the authentication data via the Internet 1 to the communication apparatus 20 that performs authentication using the authentication data.

When the onboard apparatus 10 is connected to a vehicle having no function of communicating with the cellular network 3 (stand-alone vehicle), the vehicle is allowed to operate as a connected car, and a service can be received from a business operator. At the time when the onboard apparatus 10 starts communicating with the communication apparatus 20 via an IP network that is a non-cellular network, a robust authentication process (AKA) can be performed. The vehicle is an example of "mobile body". The "mobile body" may include smart devices other than the vehicle, for example. The "mobile body" corresponds to a data source. The onboard apparatus 10 can perform robust authentication (AKA) in the case of providing the mobile body with a communication function that uses a non-cellular network (Internet 1). A communication infrastructure to be used for connection to the communication apparatus 20 may be selected from the communication apparatus 10A, the USB dongle 13, the wired LAN 15, and the like.

The embodiment illustrates a mode where the onboard apparatus 10 (information processing apparatus) is mounted (by being electrically connected, for example) on a vehicle (mobile body) by being connected to an onboard apparatus (an apparatus that generates data), such as an ECU, other than the onboard apparatus 10. However, the onboard apparatus 10 may also be mounted on a mobile body, such as an IoT device, other than a vehicle. A timing of mounting may be during manufacture of the mobile body, or may be after manufacture of the mobile body (retrofit). The onboard apparatus 10 is desirably portable, but does not necessarily have to be portable.

Furthermore, the onboard apparatus 10 can be used by itself, independent of the vehicle (mobile body). For example, an application desired by the user may be installed in the auxiliary memory 32b of the onboard apparatus 10, and a packet may be transmitted from the onboard apparatus 10 to the communication apparatus 20 by the application. Moreover, the onboard apparatus 10 may be connected to an appliance other than the mobile body, such as a computer having no communication function (a stand-alone computer such as a PC), and may allow the appliance to perform communication with the communication apparatus 20.

As described in the embodiment, the authentication data may include the SIM profile information stored in the SIM card 105. The authentication data may be a subscriber identifier (IMSI or SUPI), a card identifier (ICCID), or a uniquely identifiable identifier that is used instead of the subscriber identifier or the card identifier.

Moreover, the onboard apparatus 10 does not include a mechanism for registering a location with a cellular network using the SIM card 105 (UICC). That is, the onboard apparatus 10 does not perform reception of radio waves from a base station, connection to a base station (cell), and location registration with a cellular network. However, by performing authentication by AKA using the SIM card 105, mutual authentication between the onboard apparatus 10 and the communication apparatus 20 can be performed in a state where robust security is guaranteed.

Furthermore, the IMSI (subscriber identifier) or the ICCID (card identifier) may be used as the authentication data. However, because location registration with the cellular network is not performed, a unique identifier different from the IMSI or the ICCID and having the same size as the IMSI or the ICCID may also be used as the authentication data.

Furthermore, the onboard apparatus 10 can include the CAN communication module 34 (mechanism for connecting to a vehicle (in-vehicle network)), and a state where data from a vehicle (source) that is received by the CAN communication module 34 can be transmitted to the communication apparatus 20 can be reached by successful authentication. That is, after authentication succeeds, the onboard apparatus 10 (controller 30) can transmit, to the communication apparatus 20, data received from a vehicle that is the data source. A reception timing of data from a source may be before, at the time of, and after authentication.

Furthermore, after successful authentication, the controller 30 of the onboard apparatus 10 can set an encrypted line (SWu tunnel) between the onboard apparatus 10 and the communication apparatus 20, and can transmit data to the communication apparatus 20 by using the SWu tunnel. Data can thus be transmitted to the communication apparatus 20 in a state where security is guaranteed.

Furthermore, in the case where data is transmitted after successful authentication, to the communication apparatus 20 by using the wireless communication circuit 103 (communication apparatus 10A), the extended interface 35 (USB dongle 13 or communication apparatus 10A), the NIC 111 (wired LAN 15) or the like, the onboard apparatus 10 can receive, from the communication apparatus 20, information indicating an incentive for a party who is to bear the fee related to data transmission. For example, in the case where the user of the vehicle is to bear the free regarding transmission of packet from the onboard apparatus 10 to the communication apparatus 20, the communication apparatus 20 can generate information indicating an incentive, according to the data amount of packet, for the user from a business operator, and transmit the same to the onboard apparatus 10. The user of the vehicle (onboard apparatus 10) can thus obtain information indicating an incentive that is to be provided by the business operator. Because an incentive is provided to the user (bearer of the fee for data transmission (communication fee)), the party who is to bear the communication fee may be encouraged to enable communication between the vehicle and the communication apparatus 20 by using the onboard apparatus 10.

Processes and means described in the present disclosure can be freely combined to the extent that no technical conflict exists. Furthermore, a process that is described to be performed by one apparatus may be shared and performed by a plurality of apparatuses. Processes described to be performed by different apparatuses may be performed by one apparatus. Which function is to be implemented by which hardware configuration in a computer system can be flexibly changed. The present disclosure can also be implemented by supplying computer programs for implementing the functions described in the embodiment described above to a computer, and by one or more processors of the computer reading out and executing the programs. Such computer programs may be provided to the computer by a non-transitory computer-readable storage medium that can be connected to a system bus of the computer, or may be provided to the computer via a network.

## Claims

1. An information processing apparatus (10) communicable with a communication apparatus, the information processing apparatus comprising:
a Universal Integrated Circuit Card (UICC) (105) storing authentication data that is used for authentication of the information processing apparatus;
at least one of a wireless communication unit (103) used for wireless connection to a non-cellular network, a connector to which a wireless device used for wireless connection to the non-cellular network is detachably attachable, and a communication unit used for wired connection to the non-cellular network; and
a processor (31) configured to transmit the authentication data to the communication apparatus (10A) via the non-cellular network after the information processing apparatus is connected to the communication apparatus (10A) via the non-cellular network by use of the wireless communication unit (103), the wireless device, or the communication unit.

2. The information processing apparatus (10) according to claim 1, wherein the wireless communication unit (103) is wirelessly connected to a wireless device configured to connect the information processing apparatus (10) to the non-cellular network via a cellular network.

3. The information processing apparatus (10) according to claim 1, wherein the wireless device configured to connect the information processing apparatus (10) to the non-cellular network via a cellular network is attached to the connector.

4. The information processing apparatus (10) according to claim 1, wherein the communication unit includes an interface circuit configured to connect the information processing apparatus (10) to the non-cellular network via a wired LAN (15).

5. The information processing apparatus (10) according to claim 1, wherein the authentication data includes Subscriber Identity Module (SIM) profile information.

6. The information processing apparatus (10) according to claim 1, wherein the authentication data is a subscriber identifier, a card identifier, or a uniquely identifiable identifier that is used instead of the subscriber identifier or the card identifier.

7. The information processing apparatus (10) according to claim 1, wherein the information processing apparatus (10) has no function of registering a location with a cellular network using the UICC (105).

8. The information processing apparatus (10) according to claim 1, further comprising a mechanism for connecting to a source of data, wherein
a state where the data received from the source is allowed to be transmitted to the communication apparatus is reached when the authentication succeeds.

9. The information processing apparatus (10) according to claim 1, wherein, after the authentication succeeds, the processor sets an encrypted line between the information processing apparatus and the communication apparatus, and transmits data to the communication apparatus using the encrypted line.

10. The information processing apparatus (10) according to claim 1, wherein, in a case where data is transmitted to the communication apparatus by using the wireless communication unit (103), the wireless device, or the communication unit after the authentication succeeds, the information processing apparatus (10) receives, from the communication apparatus, information indicating an incentive for a party who is to bear a fee for transmission of the data.

11. A communication method performed by an information processing apparatus (10) communicable with a communication apparatus and including a Universal Integrated Circuit Card (UICC) (105) storing authentication data that is used for authentication, the method comprising:
transmitting the authentication data to the communication apparatus via a non-cellular network after the information processing apparatus (10) is connected to the communication apparatus via the non-cellular network by use of one of a wireless communication unit used for wireless connection to the non-cellular network, a wireless device attached to a connector of the information processing apparatus (10) and used for wireless connection to the non-cellular network, and a communication unit used for wired connection to the non-cellular network.

12. The communication method according to claim 11, wherein the wireless communication unit is wirelessly connected to a wireless device configured to connect the information processing apparatus (10) to the non-cellular network via a cellular network.

13. The communication method according to claim 11, wherein the wireless device attached to the connector connects the information processing apparatus (10) to the non-cellular network via a cellular network.

14. The communication method according to claim 11, wherein the communication unit connects the information processing apparatus (10) to the non-cellular network via a wired LAN (15).

15. The communication method according to claim 11, wherein the authentication data includes Subscriber Identity Module (SIM) profile information.
